# DEMANDE DE BREVET EUROPEEN

(11) **EP 3 896 034 A1**
(43) Date de publication de la demande: **20.10.2021**
(21) Numéro de dépôt: 21171464.7
(22) Date de dépôt: 28.11.2014
(51) Int. Cl.: C01B 33/113, H01M 4/136, H01M 4/58, H01M 4/485, H01M 4/48

(54) **PROCÉDÉ DE PRÉPARATION DE SIOX À STRUCTURE FILAMENTAIRE NANOMÉTRIQUE ET SON UTILISATION COMME MATÉRIAU D'ANODE DE BATTERIE LITHIUM-ION**

(30) Priorité: 28.11.2013 CA 2835583
(62) Demande divisionnaire de: 14865311.6
(71) Demandeur: Hydro-Québec, Montréal, QC H2Z 1A4 (CA)
(72) Inventeur: LEBLANC, Dominic, Gentilly, QC, G9H 4J4 (CA); GUERFI, Abdelbast, Brossard, QC, J4X 1W2 (CA); ZAGHIB, Karim, Longueuil, QC, J4N 1T8 (CA); HOVINGTON, Pierre, Boucherville, QC, J4B 2L4 (CA); TROTTIER, Julie, Mirabel, QC, J7J 2J4 (CA)
(74) Mandataire: Bardehle Pagenberg Partnerschaft mbB Patentanwälte Rechtsanwälte

(57) **Abrégé**

L'invention se rapporte à un procédé de préparation de particules nanofilaments de SiOₓ dans lequel x est compris entre 0,8 et 1,2, le procédé comprenant : une étape de fusion entre la silice (SiO₂) et le silicium (Si), à une température qui est au moins environ 1410°C, conduisant à la production de monoxyde de silicium (SiO) gazeux; et une étape de condensation du SiO gazeux conduisant aux particules nanofilaments de SiOₓ. Le procédé peut également incorporer l'utilisation de carbone.

## Description

### DEMANDE LIÉE

Cette demande revendique la priorité de la demande canadienne CA 2,835,583 déposée le 28 novembre 2013.

### DOMAINE DE L'INVENTION

La présente invention est relative généralement aux matériaux d'anode pour des batteries lithium-ion (Li-ion). Spécifiquement, la présente invention est relative à un procédé de préparation de SiOₓ ayant une structure filamentaire nanométrique et à son utilisation comme matériau d'anode dans des batteries lithium-ion.

### ART ANTÉRIEUR

Les batteries lithium-ion ont connu un énorme succès et une croissance commerciale importante depuis les premiers travaux dans ce domaine effectués par la compagnie Sony au début des années 90. La technologie est, à l'origine, basée sur les matériaux d'insertion du lithium comme matériau d'électrode. Essentiellement, ces matériaux consistent en de l'oxyde de cobalt comme matériau de cathode (inventé par J. B. Goodenough), et en de matériaux à base de carbone (coke ou carbone graphitisé) comme matériau d'anode.

Depuis lors, les batteries lithium-ion ont progressivement remplacé les batteries Ni-Cd et Ni-MH. En effet, la performance des batteries lithium-ion est supérieure à celle de ces dernières dans la plupart des applications électroniques. Cependant, à cause de leur coût de production élevé et leur stabilité intrinsèque sous condition abusive, spécialement à l'état de charge complète, seulement des formats relativement petits de batterie lithium-ion ont été généralement commercialisés avec succès.

De nos jours, la technologie de batteries lithium-ion repose largement sur l'utilisation d'anodes à base de graphite. Cependant, il s'avère qu'une anode utilisant un matériau carboné présente une limite théorique de 372 mAh/g de capacité énergétique spécifique. Ce qui limite le potentiel d'une augmentation future de la capacité spécifique.

L'utilisation du lithium métallique comme matériau d'anode est étudiée. En effet, le lithium métallique possède une haute densité énergétique, et peut mener à une capacité spécifique élevée. Cependant, le lithium métallique est associé à des problèmes de sécurité, dus à la croissance de dendrites lors de son utilisation. De plus, il présente une durée de vie limitée par les cycles répétés de charge/décharge. À cause de ces désavantages, plusieurs travaux de recherche se sont tournés vers l'utilisation du silicium (Si), de l'étain (Sn) et de leurs alliages comme matériaux potentiels d'anode à haute capacité.

En effet concernant le silicium, celui-ci intercale et désintercale réversiblement les ions lithium par une réaction entre le silicium et le lithium, 5Si + 22Li → Si₅Li₂₂, correspondant à une capacité théorique de 4200 mAh/g. Cette capacité est significativement plus élevée que pour les matériaux carbonés. Cependant, les anodes composées de silicium ne sont pas stables en cyclage à cause de l'expansion volumique élevée du silicium (jusqu'à environ 320%).

Une façon d'améliorer la performance du silicium en cyclage est de réduire la taille des particules dans le matériau d'anode utilisé (utilisation de particules nanométriques). En effet, l'utilisation de nanoparticules aide à relaxer les contraintes mécaniques internes associées à l'important changement volumique [1]. Une technique consiste à utiliser un matériau ayant une structure filamentaire nanométrique (nanofilament). Une telle structure permet d'accommoder les déformations dans le sens radial des fibres, évitant ainsi la pulvérisation du silicium et la perte des contacts électriques [1,2].

Une autre technique permettant la diminution de l'expansion volumique consiste à former un mélange intime de silicium et d'une composante inerte pouvant accommoder la déformation. Par exemple, le silicium est finement dispersé dans une matrice inactive servant à relaxer les contraintes mécaniques et assurer la continuité électrique [1,3]. Un tel compromis peut être effectué en utilisant un mélange de Si/SiO₂, au dépend de la perte d'une partie de la capacité du silicium. Ainsi, l'utilisation de monoxyde de silicium (SiOₓ, avec x ≈ 1) ayant subi un recuit, permet une réaction de dismutation, 2SiO → SiO₂ + Si. La phase SiOₓ amorphe hors équilibre précipite le silicium dans une matrice de SiO₂ amorphe permettant l'obtention d'un matériau ayant une capacité théorique de 1338 mAh/g [4].

La première synthèse de SiOₓ a été effectuée par Potter en 1907 [5]. Potter a observé qu'à une température supérieure à 1000°C il se produit une réaction rapide entre le silicium (Si) et le dioxyde de silicium (SiO₂). Il a par la suite démontré que si cette réaction se déroule sous atmosphère inerte, le produit de la réaction se présente sous forme d'une poudre de couleur brune, légère, très fine et volumineuse.

Le SiOₓ est actuellement commercialement disponible. Il est produit à une température modérément élevée (environ 1250°C), sous vide, selon la réaction suivante [6] :

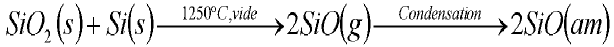

Ainsi, un mélange équimolaire de poudre de SiO₂ et de poudre de Si est chauffé dans un tube, sous vide, jusqu'à une température de 1250°C. Le SiO gazeux formé sous ces conditions est dirigé vers une zone plus froide du tube où il est condensé. Le tube est refroidi, repressurisé, et du SiOₓ solide est récupéré, puis broyé à la granulométrie désirée.

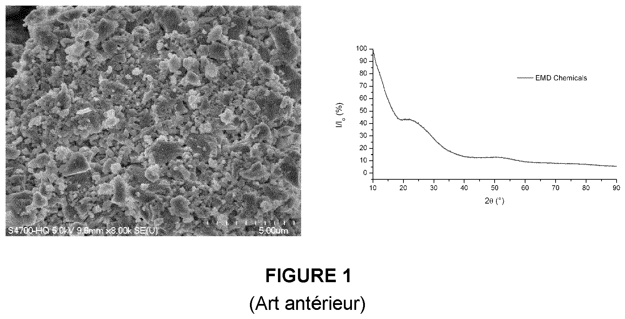

La température relativement basse du procédé, environ 1250°C, permet l'utilisation d'acier inoxydable pour la construction du tube à vide (four à cornue), mais en contrepartie, fixe la pression partielle de SiO gazeux dans l'atmosphère du tube à un niveau très bas, et la productivité du procédé en est grandement affectée. Une micrographie prise au microscope électronique à balayage, montre l'aspect typique du matériau (Figure 1) avec son analyse de diffraction-X. L'analyse par diffraction des rayons-X montre la nature amorphe du matériau. En effet, on n'y observe aucun pic de diffraction. Ceci est typique du SiO amorphe ayant été refroidi rapidement et n'ayant pas subi de réaction de dismutation.

Il est connu que le recuit d'un tel matériau à une température supérieure à 900°C, sous atmosphère inerte, active la réaction de dismutation du SiO, précipitant une phase de silicium extrêmement fine dans une matrice de silice amorphe [3] :

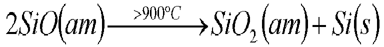

En effet, Takami et al. [3] ont préparé un composite de Si, SiOₓ et C par dismutation du monoxyde de silicium et polymérisation de l'alcool furfurylique à 1000°C. Ils ont rapporté une capacité réversible d'environ 700 mAh/g pour 200 cycles.

Il existe toujours un besoin pour des matériaux présentant une haute capacité énergétique; avantageusement, la capacité du matériau est réversible pour un nombre élevé de cycles. Par conséquent, il existe également un besoin pour des procédés conduisant à ces matériaux; avantageusement, le procédé est efficace et engendre des coûts de production économiquement acceptables.

Un matériau présentant une haute capacité énergétique peut consister en une dispersion nanométrique de Si cristallin dans une matrice de SiO₂ amorphe. Lamontagne et al. divulguent un procédé de préparation d'un tel matériau. Le procédé décrit utilise une fumée de SiO₂; de plus, le procédé incorpore l'utilisation de divers catalyseurs [7].

Le résultat obtenu par Takami et al. relatif à un composite de Si, SiOₓ et C [3] a encouragé notre Centre de recherche à investiguer de plus près l'utilisation du SiOₓ comme matériau de batterie Li-ion. Nous avons étudié le SiOₓ d'une part et le SiOₓ mélangé au graphite d'autre part en vue d'une utilisation dans les batteries lithium-ion comme matériau d'anode [4]. En effet, malgré que l'efficacité coulombique du premier cycle de charge-décharge et la conductivité électronique du SiOₓ soit faible, la capacité spécifique théorique des électrodes de SiOₓ est intéressante, 1338 mAh/g. Nous avons envisagé l'ajout de graphite au SiOₓ.

### RÉSUMÉ DE L'INVENTION

Les inventeurs ont mis au point un procédé de préparation d'un matériau SiOₓ ayant une structure filamentaire nanométrique (nanofilaments, particules nano-structurées). Le procédé selon l'invention comprend une réaction de fusion à haute température entre SiO₂ et Si conduisant à la formation de SiO gazeux et une réaction de condensation d'une atmosphère de monoxyde de silicium gazeux sous pression normale (standard) ou réduite. Selon un mode préféré, le procédé incorpore l'utilisation de carbone. Le matériau selon l'invention permet la fabrication d'anode haute performance pour batteries lithium-ion.

Selon un aspect, l'invention se rapporte à :
(1) Procédé de préparation de particules nanofilaments de SiOₓ dans lequel x est compris entre 0,8 et 1,2, le procédé comprenant :
   une étape de fusion entre la silice (SiO₂) et le silicium (Si), à une température qui est au moins environ 1410°C, conduisant à la production de monoxyde de silicium (SiO) gazeux; et
   une étape de condensation du SiO gazeux conduisant aux particules nanofilaments de SiOₓ.
(2) Procédé de préparation de particules nanofilaments de SiOₓ dans lequel x est compris entre 0,8 et 1,2, le procédé comprenant :
   une étape de fusion entre la silice (SiO₂), le silicium (Si) et une source de carbone (C), à une température qui est au moins environ 1410°C, conduisant à la production de monoxyde de silicium (SiO) gazeux; et
   une étape de condensation du SiO gazeux conduisant aux particules nanofilaments de SiOₓ.
(3) Procédé selon l'item (1) ou (2), dans lequel la SiO₂ est solide et le Si est liquide.
(4) Procédé selon l'item (1) ou (2), dans lequel l'étape de fusion se déroule dans un four à induction, un four à arc électrique ou un four à arc submergé.
(5) Procédé selon l'item (1) ou (2), dans lequel l'étape de condensation se déroule dans une zone à basse température, le SiO gazeux étant transporté dans ladite zone à l'aide d'un gaz vecteur.
(6) Procédé selon l'item (5), dans lequel le gaz vecteur est un gaz inerte, de préférence Ar, He, N₂; un gaz oxydant, de préférence air, H₂O, O₂, CO₂; un gaz réducteur, de préférence CO, H₂; un hydrocarbure volatile; ou d'une combinaison de ceux-ci.
(7) Procédé selon l'item (1) ou (2), dans lequel l'étape de fusion se déroule sous vide.
(8) Procédé selon l'item (1) ou (2), dans lequel l'étape de fusion se déroule sous atmosphère inerte.
(9) Procédé selon l'item (8), dans lequel l'atmosphère inerte est une atmosphère de Ar, He ou N₂.
(10) Procédé selon l'item (1) ou (2), dans lequel la température à l'étape de fusion est entre environ 1450 et environ 1700°C, de préférence environ 1500°C.
(11) Procédé selon l'item (2), dans lequel la source de carbone est le graphite, le charbon, le coke de pétrole, le charbon de bois, le bois ou une combinaison de ceux-ci.
(12) Procédé de préparation de particules nanofilaments de SiOₓ dans lequel x est compris entre 0,8 et 1,2, le procédé comprenant les étapes suivantes :
   on introduit du silicium (Si) liquide dans un four et on porte la température à au moins environ 1410°C;
   on introduit la silice (SiO₂) solide dans le four, accompagnée d'agitation, conduisant à la production de monoxyde de silicium (SiO) gazeux; et
   on déplace le SiO gazeux, à l'aide d'un gaz vecteur, dans une zone à basse température où il subit une condensation conduisant aux particules nanofilaments de SiOₓ.
(13) Procédé de préparation de particules nanofilaments de SiOₓ dans lequel x est compris entre 0,8 et 1,2, le procédé comprenant les étapes suivantes :
   on introduit la silice (SiO₂) solide et une source de carbone dans un four et on porte la température à au moins environ 1410°C, conduisant à la production de silicium (Si) métallique et de monoxyde de silicium (SiO) gazeux; et
   on déplace le SiO gazeux, à l'aide d'un gaz vecteur, dans une zone à basse température où il subit une condensation conduisant aux particules nanofilaments de SiOₓ.
(14) Procédé selon l'item (12), dans lequel le four est un four à induction, un four à arc électrique ou un four à arc submergé.
(15) Procédé selon l'item (12), dans lequel le four est un four à induction, et l'agitation provient du champ magnétique produit par le four.
(16) Procédé selon l'item (12), dans lequel l'étape d'introduction de la silice dans le four est accompagnée d'une étape de purge au cours de laquelle l'oxygène présent est éliminé.
(17) Procédé selon l'item (13), dans lequel le four est un four à arc submergé.
(18) Procédé selon l'item (13), dans lequel la source de carbone est le graphite, le charbon, le coke de pétrole, le charbon de bois, le bois ou une combinaison de ceux-ci.
(19) Procédé selon l'item (12) ou (13), dans lequel l'étape de production de SiO gazeux se déroule sous vide.
(20) Procédé selon l'item (12) ou (13), dans lequel l'étape de production de SiO gazeux se déroule sous atmosphère inerte.
(21) Procédé selon l'item (20), dans lequel l'atmosphère inerte est une atmosphère de Ar, He ou N₂.
(22) Procédé selon l'item (12) ou (13), dans lequel on porte la température entre environ 1450 et environ 1700°C, de préférence environ 1500°C.
(23) Procédé selon l'item (12) ou (13), dans lequel le gaz vecteur est un gaz inerte, de préférence Ar, He, N₂; un gaz oxydant, de préférence air, H₂O, O₂, CO₂; un gaz réducteur, de préférence CO, H₂; un hydrocarbure volatile; ou d'une combinaison de ceux-ci.
(24) Procédé selon l'un quelconque des items (1) à (23), dans lequel x est autour de 1.
(25) Procédé selon l'un quelconque des items (1) à (24), dans lequel SiO₂ est sous forme de quartz, quartzite ou une combinaison de celles-ci.
(26) Procédé selon l'un quelconque des items (1) à (25), dans lequel les particules de SiOₓ se présentent sous forme d'agglomérés sphériques composés de nanofilaments, chaque aggloméré ayant un diamètre d'environ 2 à 10 µm.
(27) Procédé selon l'un quelconque des items (1) à (26), dans lequel les nanofilaments ont chacun un diamètre d'environ 50 nm et sont reliés ensemble par des sphères ayant chacun un diamètre est d'environ 100 à 150 nm.
(28) Procédé selon l'un quelconque des items (1) à (27), dans lequel les particules de SiOₓ obtenues comprennent au moins l'un de : SiO₂ amorphe, Si cristallin et SiC de préférence SiC de forme β.
(29) Particules nanofilaments de SiOₓ obtenues par le procédé tel que défini à l'un quelconque des items (1) à (28).
(30) Matériau comprenant des particules nanofilaments de SiOₓ obtenues par le procédé tel que défini à l'un quelconque des items (1) à (28).
(31) Utilisation des particules nanofilaments de SiOₓ obtenues par le procédé tel que défini à l'un quelconque des items (1) à (28), pour la fabrication d'un matériau d'anode.
(32) Anode comprenant des particules nanofilaments de SiOₓ obtenues par le procédé tel que défini à l'un quelconque des items (1) à (28).
(33) Anode comprenant un matériau tel que défini à l'item (30).
(34) Batterie comprenant une anode telle que définie à l'item (32) ou (33).

D'autres objets, avantages et fonctions de la présente invention deviendront plus apparentes lors de la description suivante de modes de réalisations possibles, donnés à titres d'exemples seulement, en relation aux figures suivantes.

### BRÈVE DESCRIPTION DES FIGURES

La Figure 1 illustre l'aspect typique d'un matériau SiO commercial; micrographie prise au microscope électronique et analyse de diffraction-X.
La Figure 2 représente la capacité de l'anode lorsque SiOₓ commercial est utilisé comme matériau, et lorsqu'un mélange SiOₓ et graphite est utilisé comme matériau.
La Figure 3 représente un four à induction équipé d'un creuset de graphite.
La Figure 4 illustre des nanofilaments de SiOₓ obtenus selon le procédé de l'invention.
La Figure 5 illustre l'analyse par diffraction-X des nanofilaments de SiOₓ obtenus selon le procédé de l'invention.
La Figure 6 illustre des résultats du cyclage de formation (tests électrochimiques).
La Figure 7 illustre des résultats du cyclage de stabilité (tests électrochimiques).

### DESCRIPTION DES MODES PRÉFÉRENTIELS DE RÉALISATION DE L'INVENTION

La présente invention propose un procédé pour la préparation d'un matériau SiOₓ dans lequel x est compris entre environ 0,8 et environ 1,2; de préférence x est égal à environ 1. Le matériau SiOₓ selon l'invention a une structure filamentaire nanométrique (nanofilaments, particules nano-structurées).

Le procédé selon l'invention comprend la synthèse de particules de SiOₓ à partir de la condensation de SiO gazeux obtenu par un procédé métallurgique à haute température, dans lequel :

On procède à une étape de fusion, sous atmosphère contrôlée, pour faire réagir Si(l) avec SiO₂(l,s) et produire SiO(g). Par exemple, une fusion dans un four à induction, un four à plasma, un four à arc électrique ou un four à arc submergé). L'étape de fusion se produit selon la réaction :

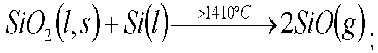

Ensuite, un gaz ou mélange de gaz est utilisé comme vecteur pour déplacer le SiO(g) dans une zone froide de condensation. Il se produit alors une nucléation et la croissance de particules solides de SiOₓ nano-structurées.

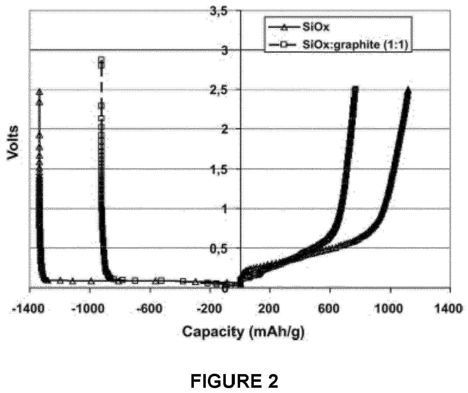

Selon un aspect de l'invention, l'étape de fusion peut être remplacée par une étape de réduction carbothermique de SiO₂. Différentes sources de carbone peuvent être utilisées; par exemple le graphite (Figure 2), le charbon, le coke de pétrole, le charbon de bois, le bois ou une combinaison de ceux-ci. La silice est par exemple sous forme de quartz, quartzite ou une combinaison de celles-ci :

*SiO₂* (/,*s*) + *C*(*s*) *→ SiO*(*g*) + *CO(g)*

Le mélange gazeux utilisé en tant que vecteur de déplacement du SiO gazeux peut être composé de gaz inertes (par exemple : Ar, He, N₂), de gaz oxydants (par exemple : air, H₂O, O₂, CO₂), de gaz réducteurs (par exemple : CO, H₂, hydrocarbures volatiles) ou d'une combinaison de ceux-ci.

### EXEMPLES

Les exemples ci-dessous sont donnés à titre purement illustratif et ne sauraient être interprétés comme constituant une quelconque limitation de l'invention.

### Exemple 1

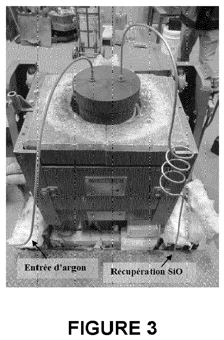

Dans un four à induction équipé d'un creuset de graphite, on fait fondre du silicium (Si) de grade métallurgique. Le montage expérimental est également composé d'un couvercle pour le creuset, d'un port d'injection d'argon qui servira comme gaz vecteur ainsi que d'un condensateur (Figure 3).

La température du silicium liquide est portée à 1500°C. À ce moment, on ajoute le sable de silice (SiO₂) à la surface du liquide (Si) puis on place le couvert et démarre l'injection d'argon. Le champ magnétique produit par le four à induction provoque la rotation de la masse liquide sur elle-même, maintenant le SiO₂(s) bien dispersé dans le Si(I). Une fois que l'oxygène contenu initialement dans le système est complètement purgé, la réaction parasite de production de fumée de silice s'arrête (2SiO(g) + O₂(g) → 2SiO₂(s)) et la réaction de production de particules de SiOₓ démarre (SiO(g) → SiO(am)). La couleur du produit passe donc de blanc (fumée de silice, SiO₂) à brun (SiOₓ).

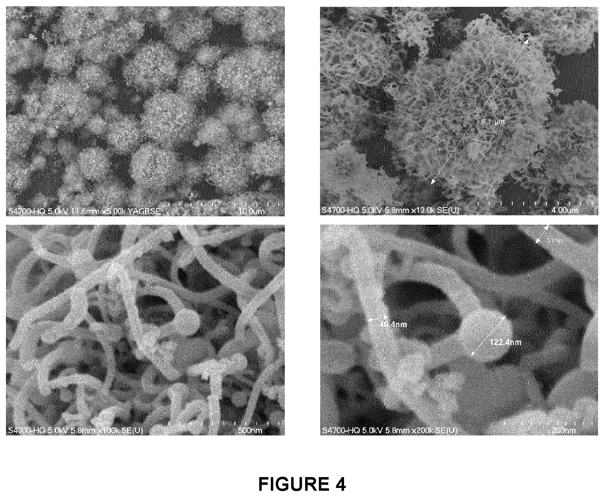

Le matériau produit est observé à l'aide d'un microscope électronique à balayage (MEB) sous un fort grossissement. Le condensat de SiOₓ produit selon l'invention présente des agglomérés sphériques de 2 à 10 µm de diamètre composés d'une structure fibreuse nanométrique. Les nanofilaments ont un diamètre approximatif de 50 nm et sont reliés ensemble par des sphères d'environ 100 à 150 nm de diamètre (Figure 4).

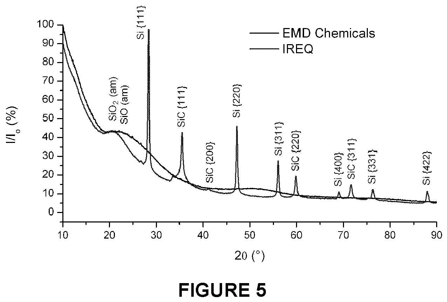

Selon l'analyse par diffraction-X (Figure 5), les particules sont composées de silice (SiO₂) amorphe, de silicium (Si) cristallin et de carbure de silicium (SiC) (forme β). Le SiOₓ a donc subi une réaction de dismutation menant à une dispersion nanométrique de Si cristallin dans une matrice de SiO₂ amorphe.

La quantité totale en oxygène, mesurée par LECO, montre un niveau en oxygène semblable pour le SiOₓ commercial et celui préparé selon l'Exemple 1.

### Exemple 2

Le silicium métallique est produit en utilisant un four à arc submergé par la réduction carbothermique du quartz (SiO₂) à l'aide de matières réductrices comme le charbon minéral, le charbon de bois ou le coke de pétrole. Lors de la réaction, environ 80% du silicium est réduit selon la réaction globale :

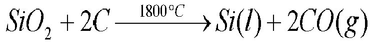

Une des réactions intermédiaires est la production du SiO gazeux dans la zone la plus chaude du four (dans l'arc électrique) selon la réaction :

*SiO₂* + *C* → *SiO*(*g*) + *CO*(*g*)

Afin de recueillir une petite quantité de SiOₓ, une modification a été effectuée sur un four à arc, en perçant longitudinalement une des électrodes de graphite, et à travers cette ouverture aspirer le SiO gazeux provenant de la zone de réaction. Lorsqu'il circule à travers l'électrode, le SiO gazeux se condense dès qu'il pénètre dans une zone plus froide, en absence d'oxygène, selon la réaction :

*SiO*(*g*) → *SiO*(*am*) → *Si(cr)* + *SiO₂* (*am*)

Le SiOₓ recueilli est fibreux, comme pour la première synthèse, et montre le même diffractogramme X que l'échantillon produit à l'Exemple 1 : une certaine quantité du SiO subit la réaction de dismutation produisant du silicium métallique et du quartz amorphe, de plus l'environnement riche en carbone produit des traces de carbure de silicium (SiC).

### Exemple 3

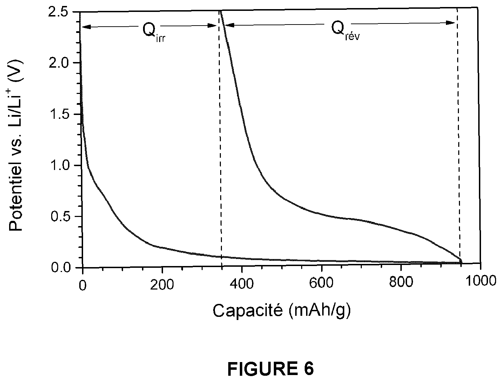

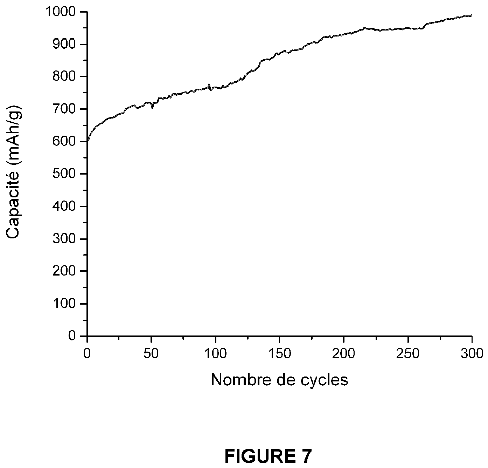

Une électrode composite est fabriquée en mélangeant le matériel actif (SiOₓ) avec 25% p/p de noir de carbone (Denka black) et 25% p/p de liant (alginate de sodium, Aldrich) dans un solvant constitué d'eau dé-ionisée pour obtenir une dispersion homogène, puis la dispersion est déposée sur un collecteur de courant de cuivre. L'électrode est séchée à 110°C durant 20 heures sous vide. Une pile-bouton de format CR2032 est assemblée dans une boîte-à-gants remplie d'hélium. L'électrolyte utilisé est le LiPF₆ (1 M) dans un mélange 3:7 (v/v) de carbonate d'éthylène (EC) et de carbonate de diéthyle (DEC) avec 2 %p/p de carbonate de vinylène (VC) (Ube) et la contre-électrode est un film mince de lithium. Les tests électrochimiques sur la pile sont effectués par cyclage décharge-charge en mode galvanostatique sur la plage de potentiel 0,005 à 2,5 V à une vitesse de C/24 (Figure 6). Une fois la capacité réversible mesurée, on effectue le cyclage de la pile afin de mesurer sa stabilité à une vitesse de C/6 (Figure 7).

Bien que la présente invention ait été décrite à l'aide de mises en œuvre spécifiques, il est entendu que plusieurs variations et modifications peuvent se greffer aux dites mises en œuvre, et la présente invention vise à couvrir de telles modifications, usages ou adaptations de la présente invention en général, les principes de l'invention et incluant toute variation de la présente description qui deviendra connue ou conventionnelle dans le champ d'activité dans lequel se trouve la présente invention, et qui peut s'appliquer aux éléments essentiels mentionnés ci-dessus, en accord avec la portée des revendications suivantes.

Les revendications ne doivent pas être limitées dans leur portée par les réalisations préférentielles illustrées dans les exemples, mais doivent recevoir l'interprétation la plus large qui soit conforme à la description dans son ensemble.

### RÉFÉRENCES

[1] Uday Kasavajjula, Chunsheng Wang, A. John Appleby; Nano- and bulk-silicon-based insertion anodes for lithium-ion secondary cells, Journal of Power Sources 163 (2007) 1003-1039.
[2] Candace K. Chan, Hailin Peng, Gao Liu, Kevin Mcllwrath, Xiao Feng Zhang, Robert A. Huggins and Yi Cui; High-performance lithium battery anodes using silicon nanowires, Nature Nanotechnology, vol. 3, January 2008, pp. 31-35.
[3] T. Morita, N. Takami, Nano Si Cluster-SiO-C Composite Material as High-Capacity Anode Material for Rechargeable Lithium, Journal of the Electrochemical Society, 153 (2) A425-A430 (2006).
[4] A. Guerfi, P. Charest, M. Dontigny, J. Trottier, M. Lagacé, P. Hovington, A. Vijh, K. Zaghib; SiOx-graphite as negative for high energy Li-ion batteries, Journal of Power Sources, Volume 196, Issue 13, 1 July 2011, pages 5667-5673.
[5] U.S. 1,104,384.
[6] H.-D. Klein, F. König, Production, Properties and Application of Silicon Monoxide, in: R. Corriu, P. Jutzi (Eds.), Tailor-made silicon-oxygen compounds-from molecules to materials, Vieweg, Braunschweig, Weiesbaden, 1996, pp. 141-145.
[7] P. Lamontagne, G. Soucy, J. Veilleux, F. Quesnel, P. Hovington, W. Zhu and K. Zaghib; Synthesis of silicon nanowires from carbothermic reduction of silica fume in RF thermal plasma; Phys. Status Solidi A, 1-7 (2014).

Des modes préférés selon l'invention sont décrits ci-dessous.
1. Procédé de préparation de particules nanofilaments de SiOₓ dans lequel x est compris entre 0,8 et 1,2, le procédé comprenant :
   une étape de fusion entre la silice (SiO₂) et le silicium (Si), à une température qui est au moins environ 1410°C, conduisant à la production de monoxyde de silicium (SiO) gazeux; et
   une étape de condensation du SiO gazeux conduisant aux particules nanofilaments de SiOₓ.
2. Procédé de préparation de particules nanofilaments de SiOₓ dans lequel x est compris entre 0,8 et 1,2, le procédé comprenant :
   une étape de fusion entre la silice (SiO₂), le silicium (Si) et une source de carbone (C), à une température qui est au moins environ 1410°C, conduisant à la production de monoxyde de silicium (SiO) gazeux; et
   une étape de condensation du SiO gazeux conduisant aux particules nanofilaments de SiOₓ.
3. Procédé selon le mode 1 ou 2, dans lequel la SiO₂ est solide et le Si est liquide.
4. Procédé selon le mode 1 ou 2, dans lequel l'étape de fusion se déroule dans un four à induction, un four à arc électrique ou un four à arc submergé.
5. Procédé selon le mode 1 ou 2, dans lequel l'étape de condensation se déroule dans une zone à basse température, le SiO gazeux étant transporté dans ladite zone à l'aide d'un gaz vecteur.
6. Procédé selon le mode 5, dans lequel le gaz vecteur est un gaz inerte, de préférence Ar, He, N₂; un gaz oxydant, de préférence air, H₂O, O₂, CO₂; un gaz réducteur, de préférence CO, H₂; un hydrocarbure volatile; ou d'une combinaison de ceux-ci.
7. Procédé selon le mode 1 ou 2, dans lequel l'étape de fusion se déroule sous vide.
8. Procédé selon le mode 1 ou 2, dans lequel l'étape de fusion se déroule sous atmosphère inerte.
9. Procédé selon le mode 8, dans lequel l'atmosphère inerte est une atmosphère de Ar, He ou N₂.
10. Procédé selon le mode 1 ou 2, dans lequel la température à l'étape de fusion est entre environ 1450 et environ 1700°C, de préférence environ 1500°C.
11. Procédé selon le mode 2, dans lequel la source de carbone est le graphite, le charbon, le coke de pétrole, le charbon de bois, le bois ou une combinaison de ceux-ci.
12. Procédé de préparation de particules nanofilaments de SiOₓ dans lequel x est compris entre 0,8 et 1,2, le procédé comprenant les étapes suivantes :
   on introduit du silicium (Si) liquide dans un four et on porte la température à au moins environ 1410°C;
   on introduit la silice (SiO₂) solide dans le four, accompagnée d'agitation, conduisant à la production de monoxyde de silicium (SiO) gazeux; et
   on déplace le SiO gazeux, à l'aide d'un gaz vecteur, dans une zone à basse température où il subit une condensation conduisant aux particules nanofilaments de SiOₓ.
13. Procédé de préparation de particules nanofilaments de SiOₓ dans lequel x est compris entre 0,8 et 1,2, le procédé comprenant les étapes suivantes :
   on introduit la silice (SiO₂) solide et une source de carbone dans un four et on porte la température à au moins environ 1410°C, conduisant à la production de silicium (Si) métallique et de monoxyde de silicium (SiO) gazeux; et
   on déplace le SiO gazeux, à l'aide d'un gaz vecteur, dans une zone à basse température où il subit une condensation conduisant aux particules nanofilaments de SiOₓ.
14. Procédé selon le mode 12, dans lequel le four est un four à induction, un four à arc électrique ou un four à arc submergé.
15. Procédé selon le mode 12, dans lequel le four est un four à induction, et l'agitation provient du champ magnétique produit par le four.
16. Procédé selon le mode 12, dans lequel l'étape d'introduction de la silice dans le four est accompagnée d'une étape de purge au cours de laquelle l'oxygène présent est éliminé.
17. Procédé selon le mode 13, dans lequel le four est un four à arc submergé.
18. Procédé selon le mode 13, dans lequel la source de carbone est le graphite, le charbon, le coke de pétrole, le charbon de bois, le bois ou une combinaison de ceux-ci.
19. Procédé selon le mode 12 ou 13, dans lequel l'étape de production de SiO gazeux se déroule sous vide.
20. Procédé selon le mode 12 ou 13, dans lequel l'étape de production de SiO gazeux se déroule sous atmosphère inerte.
21. Procédé selon le mode 20, dans lequel l'atmosphère inerte est une atmosphère de Ar, He ou N₂.
22. Procédé selon le mode 12 ou 13, dans lequel on porte la température entre environ 1450 et environ 1700°C, de préférence environ 1500°C.
23. Procédé selon le mode 12 ou 13, dans lequel le gaz vecteur est un gaz inerte, de préférence Ar, He, N₂; un gaz oxydant, de préférence air, H₂O, O₂, CO₂; un gaz réducteur, de préférence CO, H₂; un hydrocarbure volatile; ou d'une combinaison de ceux-ci.
24. Procédé selon l'un quelconque des modes 1 à 23, dans lequel x est autour de 1.
25. Procédé selon l'un quelconque des modes 1 à 24, dans lequel SiO₂ est sous forme de quartz, quartzite ou une combinaison de celles-ci.
26. Procédé selon l'un quelconque des modes 1 à 25, dans lequel les particules de SiOₓ se présentent sous forme d'agglomérés sphériques composés de nanofilaments, chaque aggloméré ayant un diamètre d'environ 2 à 10 µm.
27. Procédé selon l'un quelconque des modes 1 à 26, dans lequel les nanofilaments ont chacun un diamètre d'environ 50 nm et sont reliés ensemble par des sphères ayant chacun un diamètre est d'environ 100 à 150 nm.
28. Procédé selon l'un quelconque des modes 1 à 27, dans lequel les particules de SiOₓ obtenues comprennent au moins l'un de : SiO₂ amorphe, Si cristallin et SiC de préférence SiC de forme β.
29. Particules nanofilaments de SiOₓ obtenues par le procédé tel que défini à l'un quelconque des modes 1 à 28.
30. Matériau comprenant des particules nanofilaments de SiOₓ obtenues par le procédé tel que défini à l'un quelconque des modes 1 à 28.
31. Utilisation des particules nanofilaments de SiOₓ obtenues par le procédé tel que défini à l'un quelconque des modes 1 à 28, pour la fabrication d'un matériau d'anode.
32. Anode comprenant des particules nanofilaments de SiOₓ obtenues par le procédé tel que défini à l'un quelconque des modes 1 à 28.
33. Anode comprenant un matériau tel que défini à le mode 30.
34. Batterie comprenant une anode telle que définie à le mode 32 ou 33.

## Revendications

1. Procédé de préparation de particules nanofilaments de SiOₓ dans lequel x est compris entre 0,8 et 1,2, le procédé comprenant les étapes suivantes :
on introduit la silice (SiO₂) solide et une source de carbone dans un four et on porte la température à au moins environ 1410°C, conduisant à la production de silicium (Si) métallique et de monoxyde de silicium (SiO) gazeux; et
on déplace le SiO gazeux, à l'aide d'un gaz vecteur, dans une zone à basse température où il subit une condensation conduisant aux particules nanofilaments de SiOₓ.

2. Procédé selon la revendication 1, dans lequel le four est un four à arc submergé.

3. Procédé selon la revendication 1, dans lequel la source de carbone est le graphite, le charbon, le coke de pétrole, le charbon de bois, le bois ou une combinaison de ceux-ci.

4. Procédé selon la revendication 1, dans lequel l'étape de production de SiO gazeux se déroule sous vide.

5. Procédé selon la revendication 1, dans lequel l'étape de production de SiO gazeux se déroule sous atmosphère inerte.

6. Procédé selon la revendication 5, dans lequel l'atmosphère inerte est une atmosphère de Ar, He ou N₂.

7. Procédé selon la revendication 1, dans lequel on porte la température entre environ 1450 et environ 1700°C, de préférence environ 1500°C.

8. Procédé selon la revendication 1, dans lequel le gaz vecteur est un gaz inerte, de préférence Ar, He, N₂; un gaz oxydant, de préférence air, H₂O, O₂, CO₂; un gaz réducteur, de préférence CO, H₂; un hydrocarbure volatile; ou d'une combinaison de ceux-ci.

9. Procédé selon l'une quelconque des revendications 1 à 8, dans lequel x est autour de 1.

10. Procédé selon l'une quelconque des revendications 1 à 9,
dans lequel SiO₂ est sous forme de quartz, quartzite ou une combinaison de celles-ci; et/ou
dans lequel les particules de SiOₓ se présentent sous forme d'agglomérés sphériques composés de nanofilaments, chaque aggloméré ayant un diamètre d'environ 2 à 10 µm; et/ou
dans lequel les nanofilaments ont chacun un diamètre d'environ 50 nm et sont reliés ensemble par des sphères ayant chacun un diamètre est d'environ 100 à 150 nm; et/ou
dans lequel les particules de SiOₓ obtenues comprennent au moins l'un de : SiO₂ amorphe, Si cristallin et SiC de préférence SiC de forme β.

11. Particules nanofilaments de SiOₓ obtenues par le procédé tel que défini à l'une quelconque des revendications 1 à 10.

12. Matériau comprenant des particules nanofilaments de SiOₓ obtenues par le procédé tel que défini à l'une quelconque des revendications 1 à 10.

13. Utilisation des particules nanofilaments de SiOₓ obtenues par le procédé tel que défini à l'une quelconque des revendications 1 à 10, pour la fabrication d'un matériau d'anode.

14. Anode comprenant des particules nanofilaments de SiOₓ obtenues par le procédé tel que défini à l'une quelconque des revendications 1 à 10, ou comprenant un matériau tel que défini à la revendication 12.

15. Batterie comprenant une anode telle que définie à la revendication 14.
